# EUROPEAN PATENT SPECIFICATION

(11) **EP 1 951 804 B1**
(45) Date of publication and mention of the grant of the patent: **02.12.2009**
(21) Application number: 06826740.0
(22) Date of filing: 26.10.2006
(51) Int. Cl.: C08K 9/04, C08K 3/26

(54) **SYSTEM AND METHOD FOR REDUCING A RE-FLOCCING TENDENCY OF NANOMILLED CALCIUM CARBONATE**
SYSTEM UND VERFAHREN ZUR VERRINGERUNG DER WIEDERFLOCKUNGSNEIGUNG VON NANOGEMAHLENEM CALCIUMCARBONAT
SYSTEME ET PROCEDE AFIN DE REDUIRE UNE TENDANCE A LA REFLOCULATION DU CARBONATE DE CALCIUM NANO MOULU

(30) Priority: 27.10.2005 US 260335; 10.05.2006 US 431252
(43) Date of publication of application: 06.08.2008
(73) Proprietor: HEWLETT-PACKARD DEVELOPMENT COMPANY, L.P., Houston TX 77070 (US)
(72) Inventor: SILKE, Courtenay, San Diego, ca 92127-1899 (US); SEN, Radha, San Diego, California 92127-1899 (US)
(74) Representative: Beccarelli, Sandra Béatrice Yvonne
(86) International application number: PCT/US2006/041794
(87) International publication number: WO 2007/050763

(56) References cited:
- WO-A-2004/003093
- WO-A-2005/103377
- DATABASE WPI Week 200453 Derwent Publications Ltd., London, GB; AN 2004-547762 XP002418753 & JP 2004 204416 A (MITSUBISHI PAPER MILLS LTD) 22 July 2004 (2004-07-22)

## Description

### BACKGROUND

Wide-spread use of personal computers and printers has created an increased demand for high quality printing mediums. Digital cameras have also created a need for convenient, high quality printing capabilities. Though there have been many developments in printing technology, there are always demands for better picture resolution, color formation, image stability, etc.

Print media is commonly paper, but can also be plastics, mentals, composites, fabrics etc. Specialty print media have been developed for many different uses including: photo quality paper, high and soft gloss paper, matte paper, photo copy paper, color paper, etc. These print media serve as the image receiver from a printing device. In the case of inkjet printers the print media receives ink droplets from ink cartridges to create a desired image.

The print quality of printing operations has traditionally been limited by characteristics of the print media. To enhance the image effect in printing, a coated print media such as paper is often used. Traditional coated print media are coated with pigment compositions and other functional materials configured to promote ink transfer. Additionally, traditional print media coatings and processes are used to enhance the gloss and surface smoothness of the uncoated print media. Differences in various print media characteristics are due to differences in the type of coating used.

### SUMMARY

A method for lowering a tendency of a nanomilled calcium carbonate to re-floc includes combining the nanomilled calcium carbonate with an anionic dispersant.

The present invention provides a method of forming a printable coating exhibiting a low pendency to re-floc, comprising: providing to calcium carbonate; combining an anionic or non-ionic dispersant with said calcium carbonate; nanomilling said calcium carbonate and dispersant mixture; and further combining said nanomilled calcium carbonate and dispersant with a binder.

The present invention further provides a method for lowering a tendency of a nanomilled calcium carbonate to re-floc comprising: combining a calcium carbonate with an anionic or non-ionic dispersant; and nanomilling said mixture of calcium carbonate and dispersant.

The present invention further provides a printable coating exhibiting a low tendency to re-floc, comprising: from 80 to 100 parts nanomilled calcium carbonate; an anionic or non-ionic dispersant; and up to 20 parts of a binder.

The present invention further provides a substrate comprising: a base substrate; and a coating formed on at least one side of said base substrate; wherein said printable coating includes from 80 to 100 parts nanomilled calcium carbonate, an anionic or non-ionic dispersant, and up to 20 parts of a binder.

### BRIEF DESCRIPTION OF THE DRAWINGS

The accompanying drawings illustrate various embodiments of the present system and method and are a part of the specification. Together with the following description, the drawings demonstrate and explain the principles of the present system and method. The illustrated embodiments are examples of the present system and method and do not limit the scope thereof.

Fig. 1 is a cross-sectional view of a print media, according to one exemplary embodiment.

Fig. 2 is a flow chart illustrating a method for forming a printable coating, according to one exemplary embodiment.

Fig. 3 is a cross-sectional side-view of a print media formation apparatus, according to one exemplary embodiment.

Throughout the drawings, identical reference numbers designate similar but not necessarily identical elements.

### DETAILED DESCRIPTION

The present specification describes an exemplary coating to be formed on a desired substrate to improve glossiness. The exemplary coating exhibits a lower tendency of re-floccing and/or agglomeration of nanomilled calcium carbonate particles, when compared to traditional coatings, thus allowing a glossy coating. According to one exemplary embodiment disclosed herein, a paperpulp base media is coated on at least one side with a layer that exhibits a relatively low tendency for re-floccing, and hence increased glossiness. Further details of the present formulation will be provided below.

Before particular embodiments of the present system and method are disclosed and described, it is to be understood that the present system and method are not limited to the particular process and materials disclosed herein as such may vary to some degree. It is also to be understood that the terminology used herein is used for the purpose of describing particular embodiments only and is not intended to be limiting, as the scope of the present system and method will be defined only by the appended claims and equivalents thereof.

Concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight range of approximately 1 wt% to about 20 wt% should be interpreted to include not only the explicitly recited concentration limits of 1 wt% to about 20 wt%, but also to include individual concentrations such as 2 wt%, 3 wt%, 4 wt%, and sub-ranges such as 5 wt% to 15 wt%, 10 wt% to 20 wt%, etc.

In the following description, for purposes of explanation, numerous specific details are set forth in order to provide a thorough understanding of the present system and method for forming a printable coating comprising nanomilled calcium carbonate which exhibits a generally low tendency to re-floc. It will be apparent, however, to one skilled in the art that the present method may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

### Exemplary Overall Structure

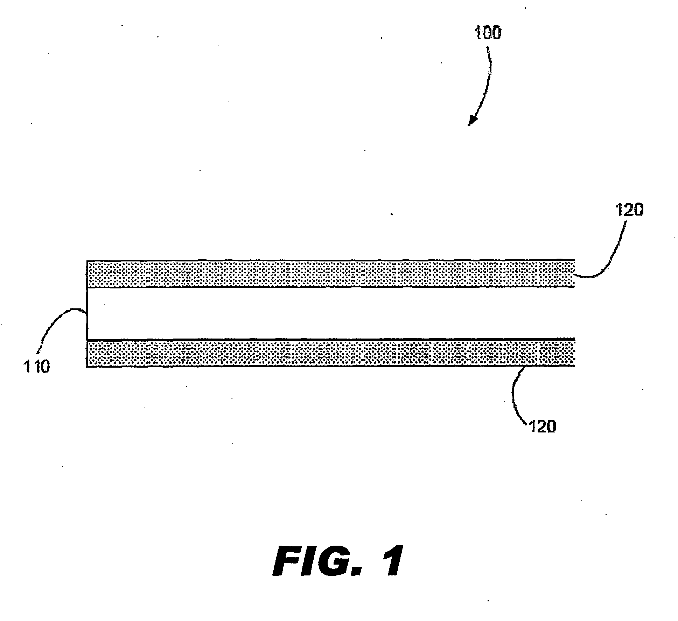

While the present system and method may be practiced by any number of methods and on any number of surfaces, the present system and method will be described herein, for ease of explanation only, in the context of forming a printable coating on a paper or resin coated substrate. FIG. 1 illustrates a cross-sectional view of an exemplary media (100), according to one exemplary embodiment. As illustrated in FIG. 1, the exemplary print media (100) includes at least two components: a base media substrate (110) and a printable coating (120) disposed on the base media substrate (110). However, according to another exemplary embodiment the printable coating may be formed on one or both sides of the desired base media. According to the present exemplary embodiment, the anti-agglomeration performance of the print media (100) is attributed, at least in part, to the composition of the printable coating (120). The base media substrate (110) and the printable coating (120) will now be described in further detail below.

### Base Media

As shown in FIG. 1, the base media substrate (110) forms the base of the print media. The present exemplary print media will be described herein, for ease of explanation only, in the context of a paper stock base media, However, it will be understood by one of ordinary skill in the art that any number of base media materials may be used by the present system and method including, but in no way limited to, paper base, pigmented paper base, cast-coated paper base, foils, and films. Further the exemplary base media can include an offset coating or a resin coating. Alternatively, the exemplary base media may also be a non-paper based substrate such as a film, a foil, a textile and the like.

### Printable Coating

The printable coating (120) formulation disposed on the base media substrate (110) comprises from approximately 80 to 100 parts nanomilled calcium carbonate with a dispersant and up to 20 parts binder wherein said binder is compatible with both said calcium carbonate and said dispersant.

Coatings based on calcium carbonate chemistry may be selected to form printable coatings, according to one exemplary embodiment, due to the ability of calcium carbonate pigment to supply increased brightness, opacity, smoothness, and gloss when compared to other traditional inorganic pigments. Nanomilled calcium carbonate has smaller particle sizes than traditionally used natural ground calcium carbonate (GCC) and chemical precipitated calcium carbonate (PCC). Particle size and shape are important to functional features of coatings such as brightness, shade, opacity, gloss. Specifically, smaller particle size typically relates to improved brightness, shade, opacity and gloss. Nanomilled calcium carbonate particles can be spherical or non-spherical and are typically less than 150 nanometers in length or diameter. An obstacle in working with small calcium carbonate particles is flocculation. As a formulation is processed, small calcium carbonate particles tend to flocculate and form larger aggregates. Flocculation of nano-milled calcium carbonate adversely affects its brightness, shade, opacity, gloss, and other functionalities.

To address the processing and performance issues associated with flocculation of nano-milled calcium carbonate, the present exemplary system and method incorporate a non-ionic or anionic dispersant that prevents flocculation of nanomilled calcium carbonate. Any number of compatible anionic or non-ionic dispersants may be used with the present exemplary system and method. However, according to one exemplary embodiment, commercially available anionic dispersant Darvan 7, Darvan C, or Acumer9300 can be used as the dispersant. Dispersants function to decrease the surface energy or chemical potential of a species in a mixture and/or solution. A lower chemical potential or surface energy typically increases the tendency for the species to remain distributed in a mixture and/or solution. According to one exemplary embodiment, small calcium carbonate particles have an increased tendency to remain as small, dispersed particles when any anionic or nonionic dispersant such as, by way of example only, Darvan 7, Darvan C, or Acumer9300 is present in the system.

As illustrated in Figure 1, the printable coating (120) adheres to the base media substrate (110). Binders may be used to maintain printable coating cohesion, i.e. keeping the particles together, and may also help with the coating adhesion to the base media substrate. The printable coating formulation comprises up to 20 parts binder. The binder is maintained at an alkaline pH in order to be compatible with the calcium carbonate and the dispersant. An alkaline pH influences particle size by preventing the calcium carbonate from dissolving, as well as affecting print media properties such as gloss, surface charge, and capacity. The binder should be compatible In order to maintain the functional properties of both the dispersant and calcium carbonate. Examples of some suitable binders for use with the present exemplary formulation include, but are in no way limited to, binders based on polyurethane, anionic or non-ionic lattices, as well as swellable polymers such as polyvinylpyrrolidone/polyvlnylimidazol copolymer, polyvinylalcohol, polyvinylacetate, and cellulose. The above-mentioned coating formulation, when formed and applied to a desired substrate as described in detail below, prevents re-floccing of the nanomilled calcium carbonate, thereby enhancing the brightness, shade, opacity and gloss of the coating.

### Exemplary Implementation and Operation

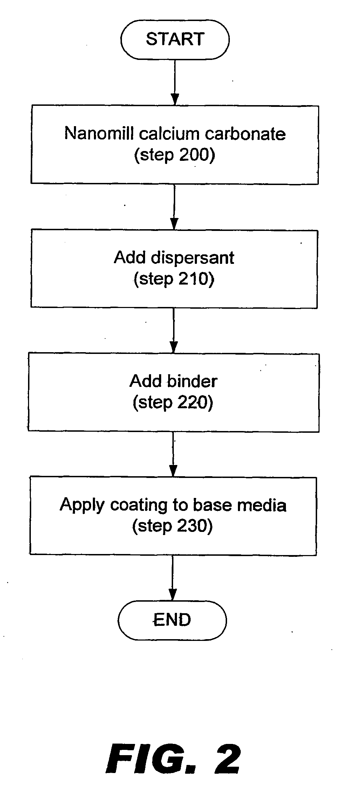

FIG. 2 illustrates an exemplary method for forming a print media (100) according to one exemplary embodiment. As illustrated in FIG. 2, the exemplary method begins by first, combining a dispersant and a calcium carbonate (step 200). Once combined, the calcium carbonate and a dispersant may be nanomilled (step 210). The dispersant-calcium carbonate mixture is then mixed with a binder (step 230) to complete the printable coating formulation. The resulting printable coating formulation is then formed on at least one surface of the base media substrate (step 240). The independent steps of the above-mentioned method will now be described in further detail below.

As shown in FIG. 2, the first step of the present exemplary method is to form a calcium carbonate slurry (step 200). The calcium carbonate slurry may include PCC and/or GCC and dispersant. Examples of possible PCC and/or GCC that may be used with the present exemplary system and method include, but are in no way limited to, commercially available Hydrocarb 60, Multiflex MM, or Opacarb A 40. Suitable dispersants for use in the present exemplary systems and methods include, but are in no way limited to, Darvan 7, Darvan C, and/or Acumer9300. According to one exemplary embodiment, the exemplary slurry contains approximately 40% solids in water and up to 2.5% dispersant.

Once the above-mentioned calcium carbonate slurry is formed, it is then nanomilled (step 210). According to one exemplary embodiment, the exemplary slurry is loaded into a re-circulation tank and pumped through a grinding chamber loaded with Yttrium Stabilized Zirconium (YTZ) beads. YTZ beads suitable in the present exemplary embodiment typically range from 0.1 to 0.3 mm in diameter. The nanomilling process is capable of, but not required to, generate agglomerated calcium carbonate particles as small as 70nm. Tables 1 and 2 present properties of calcium carbonate particles resulting from several nano-milling processes similar to those described herein.

**Table 1**

| Material | Surfactant | Final Solids % | Final Surfactant % | Beads (mm) | Final particle size (Vol. Median microns) | Final particle size (Number Median) |
|---|---|---|---|---|---|---|
| Hydrocarb 60 | Darvan 7 | 73 | 2.50 | 0.2 | 0.193 | 0.107 |
| Hydrocarb 60 | Darvan 7 | 24.3 | 1.20 | 0.1 | 0.142 | 0.0907 |
| Hydrocarb 60 | Acumer 9300 | | 12.5 | 0.3 | 0.193 | 0.093 |
| MultiflexMM | Acumer 9300 | | 12.5 | 0.3 | 0.126 | 0.08 |
| MultiflexMM | Darvan 7 | 40 | 2.80 | 0.2 | 0.138 | 0.073 |
| MultiflexMM | Darvan 7 | 27 | 1.10 | 0.1 | 0.128 | 0.0776 |
| MultiflexMM | Acumer 9300 | 26.4 | 3.00 | 0.1 | 0.082 | 0.071 |
| OpcarbA40 | Darvan 7 | 43 | 1.60 | 0.2 | 0.174 | 0.076 |
| OpcarbA40 | Acumer 9300 | 25 | 1.30 | 0.1 | 0.1576 | 0.11 |

After the exemplary slurry is nanomilled by the nanomilling process, a binder is added (step 220) to create a cohesive printable coating formulation. According to one exemplary embodiment, the formation of the printable coating formulation includes mixing up to 20 parts binder with between 80 and 100 parts dispersant-calcium carbonate mixture. When combined, the binder serves to hold the dispersant-calcium carbonate mixture together. In addition, the binder may also adhere the formulation to the base media. Examples of suitable binders in the present exemplary embodiment include, but are in no way limited to, binders based on polyurethane, anionic or non-ionic lattices, as well as swellable polymers such as polyvinylpyrrolidone/polyvinylimidazol copolymer, polyvinylalcohol, polyvinylacetate, and cellulose.

In addition to the above-mentioned components, the present exemplary coating formulation may also include any number of additives such as mordents, surfactants, viscosity modifiers, surface tension adjusting agents, rheology adjusting agents, pH adjusting agents, drying agents, colors, and the like, as is well known in the art.

When the printable coating formulation is formed, layer(s) and/or top image receiving layer(s) can be applied to one or more sides of a base media (step 230). The layer(s) can be applied to the base media using an on-machine or off-machine coater. Examples of suitable coating techniques include, but are not limited to, slotting die coaters, roller coaters, curtain coaters, blade coaters, rod coaters, air knife coaters, gravure application, air brush application and other techniques and apparatuses known to those skilled in the art.

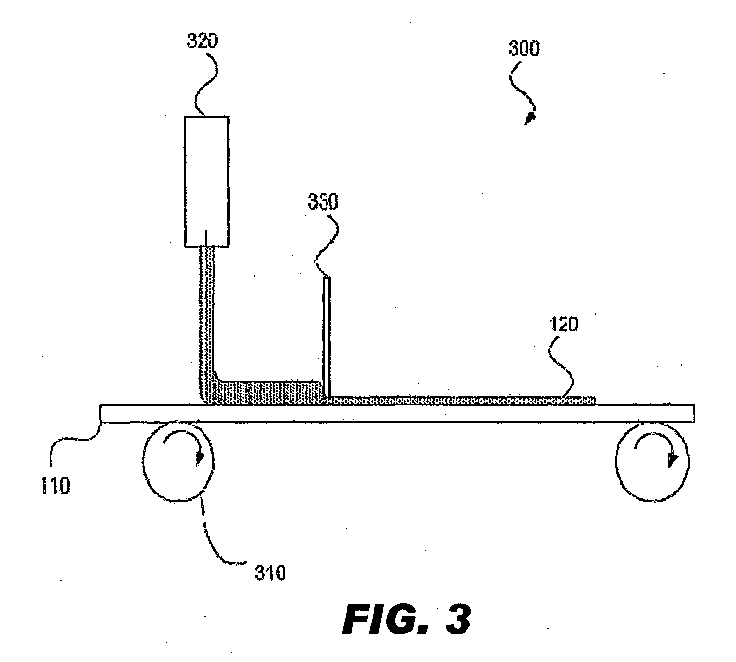

FIG. 3 illustrates a knife coating apparatus (300) according to one exemplary embodiment. As illustrated in FIG. 3, a substrate (110) may be translated adjacent to a material dispenser (320) by a number of transport rollers (310), belts, or other translating device. As the base media substrate (110) is passed adjacent to the material dispenser (320), material forming the pigment coating (120) is dispensed from the material dispenser by gravity or under pressure. As illustrated, the material forming the pigment coating (120) then coats the base media substrate (110). As the base media substrate (110) having the pigment coating (120) thereon is further translated by the transport rollers (310), it is passed under a knife (330) that scrapes off any extra pigment coating (120). According to this exemplary embodiment, the speed of the rollers (310) or other translating device, as well as the gap between the knife (330) and the base media (1100 may be selectively varied to modify the thickness of the pigment coating (120) on the base media substrate (110).

According to one exemplary embodiment, a single layer of pigment coating (120) may be formed on the base media substrate (110). Alternatively multiple layers including a base layer and top layers of pigment coating (120) may be formed in the base media substrate (110) to achieve a desired coating.

In conclusion, the present system and method for forming a printable coating comprising nanomilling a calcium carbonate with nonionic/anionic dispersants to form a stable dispersion and then forming a printable coating with a compatible binder and any other necessary additives.

The preceding description has been presented only to illustrate and describe the present method and system. It is not intended to be exhaustive or to limit the present system and method to any precise form disclosed. Many modifications and variations are possible in light of the above teaching.

The foregoing embodiments were chosen and described in order to illustrate principles of the system and method as well as some practical applications. The preceding description enables others skilled in the art to utilize the method and system in various embodiments and with various modifications as are suited to the particular use contemplated. It is intended that the scope of the method and system be defined by the following claims.

## Claims

1. A method of forming a printable coating (120) exhibiting a low tendency to re-floc, comprising:
providing a calcium carbonate;
combining an anionic or non-ionic dispersant with said calcium carbonate;
nanomilling said calcium carbonate and dispersant mixture; and
further combining said nanomilled calcium carbonate and dispersant with a binder.

2. The method of claim 1, where in said calcium carbonate comprises providing from 90 to 100 parts calcium carbonate.

3. A method for lowering a tendency of a nanomilled calcium carbonate to re-floc comprising:
combining a calcium carbonate with an anionic or non-ionic dispersant; and
nanomilling said mixture of calcium carbonate and dispersant.

4. The method of claim 3, further comprising: mixing said nanomilled calcium carbonate and said anionic dispersant with a binder to form a printable coating (120); and applying said printable coating (120) on a substrate (110).

5. A printable coating (120) exhibiting a low tendency to re-floc, comprising:
from 80 to 100 parts nanomilled calcium carbonate;
an anionic or non-ionic dispersant; and
up to 20 parts of a binder.

6. The coating (120) of claim 5, wherein said binder has an alkaline pH.

7. The coating (120) of claim 5, wherein said binder comprise at least one or more of a polyurethane, an anionic latex, a non-ionic latex, a swellable polymer, polyvinylalcohol, polyvinylacetate, or cellulose.

8. The coating (120) of claim 5, wherein said anionic dispersant comprises one of a Darvan 7, Darvan C, or Acumer9300 dispersant.

9. A substrate (100) comprising:
a base substrate (110); and
a coating (120) formed on at least one side of said base substrate (110);
wherein said printable coating (120) includes from 80 to 100 parts nanomilled calcium carbonate, an anionic or non-ionic dispersant, and up to 20 parts of a binder.

## Patentansprüche

1. Ein Verfahren zum Bilden einer bedruckbaren Beschichtung (120), die eine geringe Tendenz zeigt, wieder zu flocken, mit folgenden Schritten:
Bereitstellen eines Calciumcarbonats;
Kombinieren eines anionischen oder nicht-ionischen Dispersionsmittels mit dem Calciumcarbonat;
Nanomahlen der Mischung aus Calciumcarbonat und Dispersionsmittel; und
weiteres Kombinieren des nanogemahlenen Calciumcarbonats und Dispersionsmittels mit einem Bindemittel.

2. Das Verfahren gemäß Anspruch 1, bei dem das Calciumcarbonat ein Bereitstellen von 90 Teilen Calciumcarbonat aufweist.

3. Ein Verfahren zum Senken einer Neigung eines nanogemahlenen Calciumcarbonats, wieder zu flocken, mit folgenden Schritten:
Kombinieren eines Calciumcarbonats mit einem anionischen oder nicht-ionischen Dispersionsmittel; und
Nanomahlen der Mischung aus Calciumcarbonat und Dispersionsmittel.

4. Das Verfahren gemäß Anspruch 3, das ferner folgende Schritte aufweist: Mischen des nanogemahlenen Calciumcarbonats und anionischen Dispersionsmittels mit einem Bindemittel, um eine bedruckbare Beschichtung (120) zu bilden; und Aufbringen der bedruckbaren Beschichtung (120) auf ein Substrat (110).

5. Eine bedruckbare Beschichtung (120), die eine geringe Neigung zeigt, wieder zu flocken, mit folgenden Merkmalen:
80 bis 100 Teilen nanogemahlenem Calciumcarbonat;
einem anionischen oder nicht-ionischen Dispersionsmittel; und
bis zu 20 Teilen eines Bindemittels.

6. Die Beschichtung (120) gemäß Anspruch 5, bei der das Bindemittel einen alkalischen pH aufweist.

7. Die Beschichtung (120) gemäß Anspruch 5, bei der das Bindemittel zumindest eines oder mehrere von einem Polyurethan, einem anionischen Latex, einem nicht-ionischen Latex, einem quellfähigen Polymer, Polyvinylalkohol, Polyvinylacetat oder Cellulose aufweist.

8. Die Beschichtung (120) gemäß Anspruch 5, bei der das anionische Dispersionsmittel eines von einem Dispersionsmittel Darvan 7, Darvan C oder Acumer9300 aufweist.

9. Ein Substrat (100), das folgende Merkmale aufweist:
ein Basissubstrat (110); und
eine Beschichtung (120), die an zumindest einer Seite des Basissubstrats (110) gebildet ist;
wobei die bedruckbare Beschichtung (120) 80 bis 100 Teile nanogemahlenes Calciumcarbonat, ein anionisches oder nicht-ionisches Dispersionsmittel und bis zu 20 Teile eines Bindemittels umfasst.

## Revendications

1. Procédé de formation d'un revêtement imprimable (120) présentant une tendance réduite à la re-floculation, qui comprend :
■ la fourniture d'un carbonate de calcium ;
■ la combinaison d'un dispersant anionique ou non ionique avec ledit carbonate de calcium ;
■ le nanobroyage dudit mélange de carbonate de calcium et de dispersant ; et
■ la combinaison ultérieure dudit carbonate de calcium et dudit dispersant nanobroyés avec un liant.

2. Procédé selon la revendication 1, dans lequel ledit carbonate de calcium comprend la fourniture de 90 à 100 parties de carbonate de calcium.

3. Procédé de réduction d'une tendance à la re-floculation d'un carbonate de calcium nanobroyé, qui comprend :
■ la combinaison d'un carbonate de calcium avec un dispersant anionique ou non-ionique ; et
■ le nanobroyage dudit mélange de carbonate de calcium et de dispersant.

4. Procédé selon la revendication 3, qui comprend en outre : le mélange dudit carbonate de calcium nanobroyé et dudit dispersant anionique avec un liant pour former un revêtement imprimable (120) ; et l'application dudit revêtement imprimable (120) sur un substrat (110).

5. Revêtement imprimable (120) présentant une tendance réduite à la re-floculation, qui comprend :
■ de 80 à 100 parties de carbonate de calcium nanobroyé ;
■ un dispersant anionique ou non-ionique ; et
■ jusqu'à 20 parties d'un liant.

6. Revêtement (120) selon la revendication 5, dans lequel ledit liant a un pH alcalin.

7. Revêtement (120) selon la revendication 5, dans lequel ledit liant comprend au moins l'un d'un polyuréthane, d'un latex anionique, d'un latex non-ionique, d'un polymère gonflable, d'un alcool polyvinylique, d'un acétate de polyvinyle ou d'une cellulose.

8. Revêtement (120) selon la revendication 5, dans lequel ledit dispersant anionique comprend l'un des dispersants Darvan 7, Darvan C ou Acumer 9300.

9. Substrat (100) comprenant :
■ un substrat de base (110) ; et
■ un revêtement (120) formé sur au moins un côté dudit substrat de base (110) ;
dans lequel ledit revêtement imprimable (120) comprend de 80 à 100 parties de carbonate de calcium nanobroyé, un dispersant anionique ou non-ionique, et jusqu'à 20 parties d'un liant.
